## Europäisches Patentamt

## European Patent Office

## Office européen des brevets

(19)

(11) Veröffentlichungsnummer: **0 270 110 B1**

(12) **EUROPÄISCHE PATENTSCHRIFT**

(45) Veröffentlichungstag der Patentschrift:
22.08.90

(51) Int. Cl.⁵: **F16D 3/79**

(21) Anmeldenummer: **87117885.1**

(22) Anmeldetag: **03.12.87**

(54) Flexible Ganzstahl-Wellenkupplung.

(30) Priorität: **05.12.86 DE 3641547**

(43) Veröffentlichungstag der Anmeldung:
**08.06.88 Patentblatt 88/23**

(45) Bekanntmachung des Hinweises auf die Patenterteilung:
**22.08.90 Patentblatt 90/34**

(84) Benannte Vertragsstaaten:
**CH DE GB IT LI**

(56) Entgegenhaltungen:
**FR-A- 2 472 109**
**GB-A- 1 396 200**
**GB-A- 1 565 834**

(73) Patentinhaber: **ATEC-Weiss KG,**
**Von-Siemens-Strasse 1, D-4426 Vreden(DE)**

(72) Erfinder: **Weiss, Rudolf, Händelstrasse 13,**
**D-4426 Vreden(DE)**

(74) Vertreter: **Patentanwaltsbüro Cohausz & Florack,**
**Postfach 14 01 20 Schumannstrasse 97,**
**D-4000 Düsseldorf 1(DE)**

ACTORUM AG

## Beschreibung

Die Erfindung bezieht sich auf eine flexible Ganzstahl-Wellenkupplung mit einem Anschlußflansch für jede der beiden Kupplungshälften und einem zwischen und mit axialem Abstand von den beiden Anschlußflanschen angeordneten und mit Spannbolzen in Umfangsrichtung wechselweise mit dem einen oder anderen Anschlußflansch verbundenen, federelastischen Lamellenpaketkranz, der auf Büchsen, insbesondere Spannbüchsen der Spannbolzen sitzt und zwischen Distanzringen zusammen mit den Anschlußflanschen verspannt ist.

Bei einer bekannten Ganzstahl-Wellenkupplung besteht der Lamellenpaketkranz aus einzelnen Laschen, die ihrerseits jeweils aus einer Vielzahl von dünnen, übereinanderliegenden und zu einem Paket zusammengefaßten Einzellamellen bestehen. Die Spannbolzen verspannen jeweils zwei an ihren Enden übereinander angeordnete Laschen. Damit sich die einzelnen Lamellen im Betrieb, zum Beispiel bei Stoßbelastung, nicht verlagern, ist es erforderlich, die Pakete mit hoher Spannkraft zu verspannen. Darüber hinaus können die Laschen dadurch festgelegt sein, daß Spannbüchsen vorgesehen sind, die radiale Toleranzen in den Bohrungen der Pakete ausgleichen (DE-OS 34 43 485).

Beim Einsatz solcher Wellenkupplungen hat sich gezeigt, daß trotz der hohen Spannkraft, mit der die Lamellenpakete verspannt sind, die jeweils äußeren Lamellen im Bereich der Spannbolzen besonders bruchgefährdet sind. Deshalb liegt der Erfindung die Aufgabe zugrunde, eine flexible Ganzstahl-Wellenkupplung der eingangs genannten Art zu schaffen, bei der die äußeren Lamellen des Lamellenpaketkranzes weniger bruchgefährdet als bei der bekannten Kupplung sind.

Diese Aufgabe wird erfindungsgemäß dadurch gelöst, daß zwischen den Distanzringen und dem Lamellenpaketkranz jeweils eine Unterlegscheibe vorgesehen ist, die lamellenpaketseitig eine reibungsarme Oberfläche aufweist. Vorzugsweise weist jede Unterlegscheibe beidseitig eine reibungsarme Oberfläche auf. Die reibungsarme Oberfläche kann dadurch erhalten werden, daß die Unterlegscheibe mit einem Schmiermittelbelag, zum Beispiel mit einem Druckschmiermittel eingefettet ist. Ein geeignetes Druckschmiermittel ist beispielsweise Molykote.

Bei der Suche nach der Ursache für die vorzeitigen Brüche der oberen Lamellen wurde gefunden, daß bei Erzeugung der hohen Verspannkraft sich die oberen Lamellen infolge der leichten Drehung der Büchse bzw. der Distanzringe leicht aufwerfen. Durch den Einsatz der Unterlegscheiben mit der bzw. den reibungsarmen Oberflächen wird verhindert, daß ein Verdrehmoment durch Reibung auf die oberen Lamellen von der Büchse bzw. den Distanzringen beim Verspannen der Schraubenbolzen übertragen wird. Zu einem Aufwerfen der oberen Lamellen kann es also nicht mehr kommen.

Im folgenden wird die Erfindung anhand einer ein Ausführungsbeispiel darstellenden Zeichnung näher erläutert, die einen Ausschnitt aus der Wellenkupplung im axialen Querschnitt zeigt.

Zwei Wellen 1,2 tragen einander zugekehrte Flansche 3,4, zwischen denen ein sie verbindender Federlamellenpaketkranz 5 angeordnet ist.

Der Federlamellenpaketkranz 5 besteht aus einzelnen Laschen 6,7, die an ihren Enden übereinandergelegt sind und einen Kranz bilden. Jede Lasche 6,7 setzt sich aus einer Vielzahl von dünnen, flachen Lamellen aus Federstahl zusammen. Anstelle eines solchen Lamellenpaketkranzes kann auch ein Lamellenpaketkranz aus ringförmigen Lamellen vorgesehen sein.

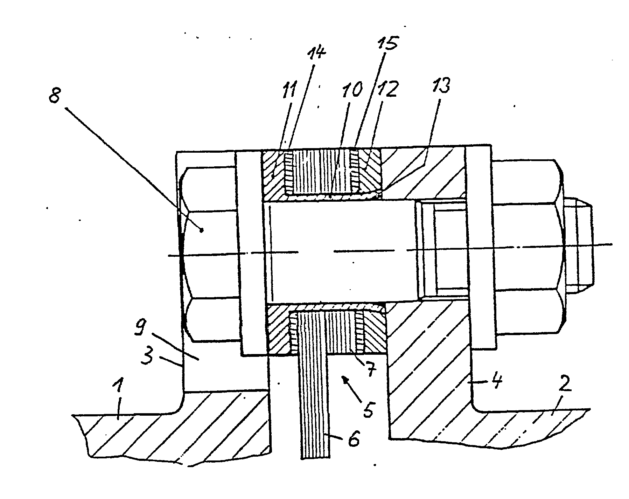

Der Kranz 5 ist in Umfangsrichtung gesehen abwechselnd mittels eines Schraubenbolzens 8 mit dem einen oder anderen Flansch 3,4 verspannt. In der Zeichnung ist der Kranz 5 mit dem rechten Flansch 4 verspannt, während der andere Flansch 3 an der gegenüberliegenden Seite für jeden Schraubenbolzen 8 eine Aussparung 9 aufweist. Der Kranz 5 sitzt auf einer Büchse 10, die an einem Ende einen Kragen 11 aufweist. Auf der Büchse 10 sitzt an der dem Kragen 11 gegenüberliegenden Seite ein Ring 12, der durch den aufgebördelten Rand 13 der Büchse 10 gehalten ist. Die Laschen 6,7 bilden mit der Büchse 10, dem Kragen 11 und dem Ring 12 eine vormontierte Baueinheit.

Die soweit beschriebene Ganzstahl-Lamellenkupplung gehört zum Stand der Technik (DE-OS 34 43 485). Bei einer solchen Kupplung ist nach der Lehre der Erfindung auf beiden Seiten des Lamellenpaketkranzes 5 zwischen diesem und dem Kragen 11 bzw. dem Ring 12 eine Unterlegscheibe 14,15 vorgesehen, die mindestens an einer Seite, vorzugsweise aber an beiden Seiten einen reibungsmindernden Belag, zum Beispiel ein Druckschmiermittel, wie Molykote, trägt, welches eine Reibungszahl von weniger als 0,1, vorzugsweise zwischen 0,05 und 0,08, hat. Durch den Einsatz solcher Unterlegscheiben 14,15 wird verhindert, daß beim Verspannen des Lamellenpaketkranzes 5 durch den Schraubenbolzen 4 es zu Verwerfungen an den oberen Lamellen kommt. Durch Vermeidung solcher Verwerfungen wird die Gefahr von vorzeitigen Brüchen der oberen Lamellen verringert.

## Patentansprüche

1. Flexible Ganzstahl-Wellenkupplung mit einem Anschlußflansch (3, 4) für jede der beiden Kupplungshälften und einem zwischen und mit axialem Abstand von den beiden Anschlußflanschen (3, 4) angeordneten und mit Spannbolzen (8) in Umfangsrichtung wechselweise mit dem einen oberen Anschlußflansch verbundenen, federelastischen Lamellenpaketkranz (5), der auf Büchsen (10), insbesondere Spannbüchsen der Spannbolzen sitzt und zwischen Distanzringen (11, 12) zusammen mit dem Anschlußflansch verspannt ist, dadurch gekennzeichnet, daß zwischen den Distanzringen (11, 12) und dem Lamellenkranz (5) jeweils eine Unterlegscheibe (14, 15) vorgesehen ist, die einseitig eine reibungsarme Oberfläche mit einer Reibungszahl von weniger als 0,1 aufweist.

2. Wellenkupplung nach Anspruch 1, dadurch gekennzeichnet, daß die Unterlegscheiben (14, 15) beidseitig eine reibungsarme Oberfläche mit einer Reibungszahl von weniger als 0,1 aufweisen.

3. Wellenkupplung nach Anspruch 1 oder 2, dadurch gekennzeichnet, daß die reibungsarmen Oberflächen einen Druckschmiermittelbelag tragen.

4. Wellenkupplung nach einem der Ansprüche 1–3, dadurch gekennzeichnet, daß die reibungsarme Oberfläche eine Reibungszahl zwischen 0,05 und 0,08 hat.

**Claims**

1. A flexible all-steel shaft coupling having a connecting flange (3, 4) for each of the two coupling halves and a resilient lamella pack ring (5) which is disposed between and at an axial distance from the two connecting flanges (3, 4), is connected by clamping bolts (8) in the peripheral direction alternately with one top connecting flange, sits on bushes (10), more particularly clamping bushes of the clamping bolts, and is clamped between spacing rings (11, 12) together with the connecting flange, characterized in that provided in each case between the spacing rings (11, 12) and the lamella ring (5) is a washer (14, 15) having on one side a low-friction surface with a coefficient of friction of less than 0.1.

2. A shaft coupling according to claim 1, characterized in that the washers (14, 15) have on both sides a low-friction surface with a coefficient of friction of less than 0.1.

3. A shaft coupling according to claims 1 or 2, characterized in that the low-friction surfaces bear a pressure lubricant coating.

4. A shaft coupling according to one of claims 1 to 3, characterized in that the low-friction surface has a coefficient of friction of between 0.05 and 0.08.

**Revendications**

1. Accouplement d'arbres tout-acier avec une flasque de raccord (3, 4) pour chacune des deux moitiés d'accouplement, et avec une couronne en empilage de lamelles (5) à élasticité de ressort disposée entre les deux flasques de raccord (3, 4) et à distance de celles-ci et reliée alternativement en direction périphérique avec la flasque de raccord qui est supérieure, au moyen de boulons de serrage (8), la couronne reposant sur des douilles (10), en particulier des douilles de serrage des boulons de serrage et étant croisillonnée entre des bagues d'écartement (11, 12) en même temps que la flasque de raccord; caractérisé en ce qu'une rondelle plate (14, 15) est prévue à chaque fois entre les bagues d'écartement (11, 12) et la couronne de lamelles (5), qui présente sur une face une surface à faible frottement avec un coefficient de friction inférieur à 0,1.

2. Accouplement d'arbres selon la revendication 1, caractérisé en ce que les rondelles plates (14, 15) ont, sur les deux faces, une surface à faible frottement avec un coefficient de friction inférieur à 0,1.

3. Accouplement d'arbres selon la revendication 1 ou 2, caractérisé en ce que les surfaces à faible frottement portent un revêtement en agent de graissage sous pression.

4. Accouplement d'arbres selon l'une des revendications 1–3, caractérisé en ce que la surface à faible coefficient de frottement a un coefficient de friction compris entre 0,05 et 0,08.